(19) Europäisches Patentamt
European Patent Office
Office européen des brevets

(11) Veröffentlichungsnummer: **0 475 154 B1**

# (12) EUROPÄISCHE PATENTSCHRIFT

(45) Veröffentlichungstag der Patentschrift: **15.11.95**

(51) Int. Cl.6: **C09B 31/072**, C09B 31/08, C09B 31/057, C09B 44/02, C09D 11/02

(21) Anmeldenummer: **91114122.4**

(22) Anmeldetag: **23.08.91**

Die Akte enthält technische Angaben, die nach dem Eingang der Anmeldung eingereicht wurden und die nicht in dieser Patentschrift enthalten sind.

## (54) Disazofarbstoffe deren Kupplungskomponenten aus der Reihe der Hydroxysulfonylnaphthaline stammen.

(30) Priorität: **08.09.90 DE 4028630**

(43) Veröffentlichungstag der Anmeldung:
**18.03.92 Patentblatt 92/12**

(45) Bekanntmachung des Hinweises auf die Patenterteilung:
**15.11.95 Patentblatt 95/46**

(84) Benannte Vertragsstaaten:
**CH DE FR GB IT LI**

(56) Entgegenhaltungen:
**EP-A- 0 066 781**
**EP-A- 0 356 080**
**US-A- 4 694 075**

**PATENT ABSTRACTS OF JAPAN vol. 10, no. 144 (C-349)(2201) 27 May 1986**

(73) Patentinhaber: **BASF Aktiengesellschaft**
**Carl-Bosch-Strasse 38**
**D-67063 Ludwigshafen (DE)**

(72) Erfinder: **Schroeder, Gunter-Rudolf, Dr.**
**Turnerstrasse 22**
**W-6900 Heidelberg (DE)**
Erfinder: **Mayer, Udo, Dr.**
**Max-Slevogt-Strasse 27**
**W-6710 Frankenthal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 475 154 B1

## Beschreibung

Die vorliegende Erfindung betrifft neue Disazofarbstoffe der Formel I

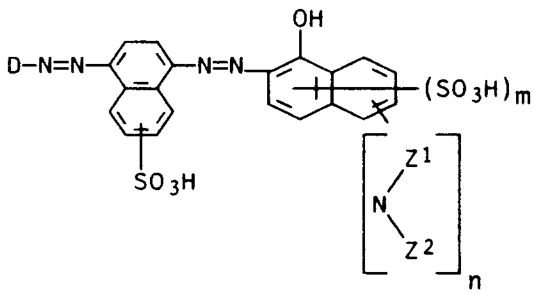

(I),

in der

m 1 oder 2,

n 0 oder 1,

$Z^1$ Wasserstoff oder gegebenenfalls substituiertes $C_1$-$C_4$-Alkyl,

$Z^2$ Wasserstoff, gegebenenfalls substituiertes $C_1$-$C_4$-Alkyl, $C_1$-$C_4$-Alkanoyl, gegebenenfalls substituiertes Benzoyl, $C_1$-$C_4$-Alkylsulfonyl, gegebenenfalls substituiertes Phenylsulfonyl oder einen Rest der Formel

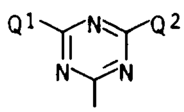

,

in der $Q^1$ und $Q^2$ gleich oder verschieden sind und unabhängig voneinander jeweils für Halogen, Amino, $C_1$-$C_4$-Mono- oder Dialkylamino oder Phenylamino stehen, und

D den Rest einer Diazokomponente aus der Thiazol- oder Thiophenreihe oder einen Rest der Formel

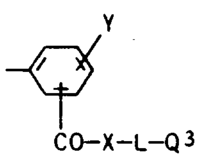

oder

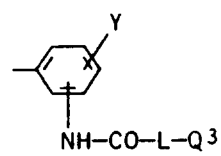

bedeuten, wobei

Y für Wasserstoff, gegebenenfalls substituiertes $C_1$-$C_6$-Alkyl, gegebenenfalls substituiertes $C_1$-$C_6$-Alkoxy, Halogen oder Nitro,

X für Sauerstoff, Imino oder $C_1$-$C_4$-Alkylimino,

L für $C_1$-$C_6$-Alkylen und

$Q^3$ für einen Rest der Formel

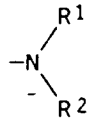

oder

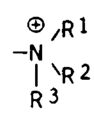

An$^{\ominus}$

stehen, worin $R^1$, $R^2$ und $R^3$ gleich oder verschieden sind und unabhängig voneinander jeweils die Bedeutung von Wasserstoff, $C_1$-$C_4$-Alkyl oder Benzyl oder $R^1$ und $R^2$ zusammen mit dem sie verbindenden Stickstoffatom die Bedeutung eines 5- bis 7-gliedrigen gesättigten oder aromatischen heterocyclischen Rests, der gegebenenfalls weitere Heteroatome aufweist, und An$^{\ominus}$ die

Bedeutung eines Anions besitzen.

Aus der US-A-4 752 337 und der US-A-4 626 284 sind Disazofarbstoffe, bekannt, die ähnlich aufgebaut sind wie diejenigen der obengenannten Formel I. Jedoch leitet sich die Dliazokomponente D-$NH_2$ entweder von 2-Hydroxy-4-aminobenzoesäure, Anilinsulfonsäure oder p-Phenylendiaminderivaten ab.

Weiterhin beschreibt die US-A-4 694 075 Disazofarbstoffe, deren Diazokomponente sich von Anthranilsäureestern ableitet, die in der alkoholischen Esterkomponente eine basische Gruppe aufweisen. Als Kupplungskomponente werden dort 1-Aminonaphthalin sowie Resorcin verwendet.

Es hat sich jedoch gezeigt, daß solche Farbstoffe ungenügende anwendungstechnische Eigenschaften aufweisen.

Aufgabe der vorliegenden Erfindung war es nun, neue Disazofarbstoffe bereitzustellen, die sich vorteilhaft zur Herstellung von Tinten, insbesondere von Tinten für das Ink-Jet-Verfahren, eignen.

Demgemäß wurden die eingangs näher bezeichneten Disazofarbstoffe der Formel I gefunden.

Alle in der obengenannten Formel I auftretenden Alkyl- und Alkylengruppen können sowohl geradkettig als auch verzweigt sein.

Wenn in der obengenannten Formel I substituierte Alkylgruppen auftreten, so können als Substituenten z.B. Phenyl, $C_1$-$C_4$-Alkoxy oder Cyano in Betracht kommen.

Wenn in der obengenannten Formel I substituierte Phenylgruppen auftreten, so können als Substituenten z.B. $C_1$-$C_4$-Alkyl, $C_1$-$C_4$-Alkoxy, Halogen, dabei insbesondere Chlor oder Brom, oder $C_1$-$C_4$-Dialkylamino, dabei insbesondere $C_1$-$C_4$-Dialkylamino in Ringposition 4, in Betracht kommen.

Reste $Z^1$, $Z^2$, Y, $R^1$, $R^2$ und $R^3$ sind z.B. Methyl, Ethyl, Propyl, Isopropyl, Butyl, Isobutyl oder sec-Butyl.

Reste $Z^1$, $Z^2$ und Y sind weiterhin z.B. Benzyl, 1- oder 2-Phenylethyl, 2-Cyanoethyl, 3-Cyanopropyl, 4-Cyanobutyl, 2-Methoxyethyl, 2-Ethoxyethyl, 2- oder 3-Methoxypropyl, 2- oder 3-Ethoxypropyl, 2- oder 4-Methoxybutyl oder 2- oder 4-Ethoxybutyl.

Reste Y sind weiterhin z.B. Pentyl, Isopentyl, Neopentyl, tert-Pentyl, Hexyl, 2-Methylpentyl, 5-Cyanopentyl, 6-Cyanohexyl, 5-Methoxypentyl, 6-Methoxyhexyl, Methoxy, Ethoxy, Propoxy, Isopropoxy, Butoxy, Isobutoxy, sec-Butoxy, Isopentyloxy, Neopentyloxy, tert-Pentyloxy, Hexyloxy, Benzyloxy, 1- oder -Phenylethoxy, 2-Cyanoethoxy, 3-Cyanopropoxy, 4-Cyanobutoxy, 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, Fluor, Chlor oder Brom.

Reste $Z^2$ sind weiterhin z.B. Formyl, Acetyl, Propionyl, Butyryl, Isobutyryl, Benzoyl, 2- oder 4-Methylbenzoyl, 2- oder 4-Methoxybenzoyl, 2-oder 4-Chlorbenzoyl, 2- oder 4-Dimethylaminobenzoyl, Methylsulfonyl, Ethylsulfonyl, Propylsulfonyl, Isopropylsulfonyl, Butylsulfonyl, Phenylsulfonyl, 2-oder 4-Methoxyphenylsulfonyl, 2- oder 4-Chlorphenylsulfonyl oder 2- oder 4-Dimethylaminophenylsulfonyl.

Reste $Q^1$ und $Q^2$ sind z.B. Fluor, Chlor, Brom, Mono- oder Dimethylamino, Mono- oder Diethylamino, Mono- oder Dipropylamino, Mono- oder Diisopropylamino, Mono- oder Dibutylamino oder N-Methyl-N-ethylamino.

Reste X sind z.B. Methylimino, Ethylimino, Propylimino, Isopropylimino oder Butylimino.

Reste L sind z.B. Methylen, Ethylen, 1,2- oder 1,3-Propylen, Isopropyliden, 1,2-, 1,3-, 2,3- oder 1,4-Butylen, 1,5-Pentylen oder 1,6-Hexylen.

Geeignete Anionen $An^{\ominus}$ sind z.B. anorganische oder organische Anionen, wie Fluorid, Chlorid, Bromid, Iodid, Acetat, Mono- Di- oder Trichloracetat, Methylsulfonat, Phenylsulfonat, Tolylsulfonat, Methosulfat oder Ethosulfat.

Wenn die Reste $R^1$ und $R^2$ zusammen mit dem sie verbindenden Stickstoffatom einen 5- bis 7-gliedrigen gesättigten oder aromatischen heterocyclischen Rest, der gegebenenfalls weitere Heteroatome aufweist, bedeuten, so kann dafür z.B. Pyrrolidinyl, Piperidinyl, Morpholinyl, Piperazinyl, N-($C_1$-$C_4$-Alkyl)-piperazinyl, wie N-Methyl- oder N-Ethylpiperazinyl, Pyrrolyl, Imidazolyl, 3-($C_1$-$C_4$-Alkyl)imidazol-1-ylium, oder Pyridinium in Betracht kommen. Bei den beiden letztgenannten Resten tritt dabei als Gegenion das Anion $An^{\ominus}$ auf, wobei $An^{\ominus}$ die obengenannte Bedeutung besitzt.

Wenn D den Rest einer Diazokomponente aus der Thiazol- oder Thiophenreihe darstellt, so gehorcht der Rest D vorzugsweise der Formel II oder III

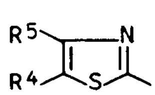

(II)

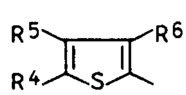

(III)

,

worin

$R^4$ $R^5$ und $R^6$ gleich oder verschieden sind und unabhängig voneinander jeweils Wasserstoff, gegebenenfalls substituiertes $C_1$-$C_4$-Alkyl, gegebenenfalls substituiertes Phenyl, Cyano oder $C_1$-$C_4$-Alkoxycarbonyl bedeuten oder $R^4$ und $R^5$ zusammen für den Rest eines anellierten Benzorings stehen.

Geeignete Reste $R^4$, $R^5$ sind $R^6$ und z.B. Methoxycarbonyl, Ethoxycarbonyl, Propoxycarbonyl, Isopropoxycarbonyl, Butoxycarbonyl, Isobutoxycarbonyl, Phenyl, 2-, 3- oder 4-Methylphenyl, 2-, 3- oder 4-Methoxyphenyl oder 2-, 3- oder 4-Chlorphenyl. Für weitere beispielhafte Aufzählungen sei auf die oben vorgenommenen Ausführungen verwiesen.

Bevorzugt sind Disazofarbstoffe, die der Formel Ia

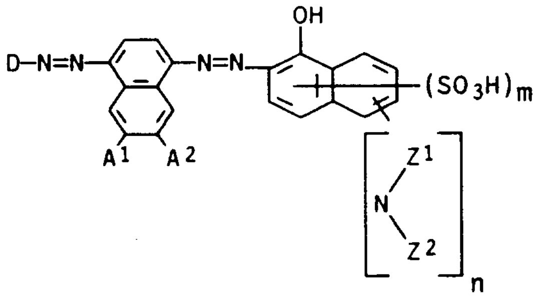

(Ia),

gehorchen, in der

einer der beiden Reste $A^1$ und $A^2$ Wasserstoff und der andere Hydroxysulfonyl bedeutet und m, n, D, $Z^1$ und $Z^2$ jeweils die obengenannte Bedeutung besitzen.

Weiterhin bevorzugt sind Disazofarbstoffe der Formel I, in der n 1 bedeutet.

Besonders bevorzugt sind Disazofarbstoffe der Formel I, in der n 1, $Z^1$ Wasserstoff und $Z^2$ Wasserstoff, $C_1$-$C_4$-Alkanoyl oder Benzoyl bedeuten.

Weiterhin besonders bevorzugt sind Disazofarbstoffe der Formel I, in der D

a) einen Rest der Formel II, in der $R^4$ und $R^5$ jeweils Wasserstoff oder $R^4$ $C_1$-$C_4$-Alkoxycarbonyl und $R^5$ $C_1$-$C_4$-Alkyl, dabei insbesondere Methyl,

b) einen Rest der Formel III, in der $R^4$ $C_1$-$C_4$-Alkoxycarbonyl, $R^5$ $C_1$-$C_4$-Alkyl, dabei insbesondere Methyl, und $R^6$ Cyano oder

c) einen Rest der Formel

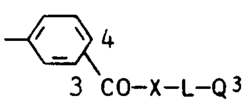

oder

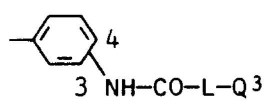

,

wobei der Rest -CO-X-L-$Q^3$ oder -NH-CO-L-$Q^3$ jeweils in Ringposition 3 oder 4 steht,

X Sauerstoff oder Imino,

L $C_2$-$C_4$-Alkylen und

$Q^3$ $C_1$-$C_4$-Dialkylamino oder 3-($C_1$-$C_4$-Alkyl)imidazol-1-ylium-$An^\ominus$, wobei $An^\ominus$ die obengenannte Bedeutung besitzt, bedeuten.

Die erfindungsgemäßen Disazofarbstoffe der Formel I können nach an sich bekannten Methoden hergestellt werden. Beispielsweise kann man Amin der Formel IV

$D$-$NH_2$ (IV),

in der D die obengenannte Bedeutung besitzt, auf übliche Weise diazotieren und mit einer Aminonaphthalinsulfonsäure der Formel V

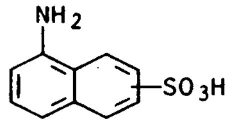

(V)

kuppeln.

Der resultierende Monoazofarbstoff der Formel VI

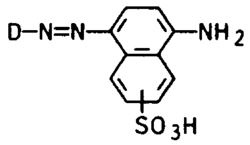

(VI),

in der D die obengenannte Bedeutung besitzt, wird anschließend diazotiert und mit einem Hydroxynaphthalinderivat der Formel VII

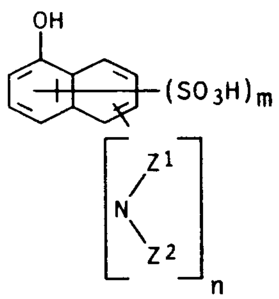

(VII),

in der

n, m, $Z^1$ und $Z^2$ jeweils die obengenannte Bedeutung besitzen, gekuppelt.

Diejenigen Farbstoffe der Formel I, in denen im Rest D der Diazokomponente ein quartäres Stickstoffatom vorhanden ist, werden üblicherweise aus den entsprechenden neutralen Farbstoffen durch Alkylierung mit üblichen Alkylierungsmitteln oder durch Umsetzung mit stickstoffhaltigen Heterocyclen erhalten.

Die erfindungsgemäßen Farbstoffe eignen sich in vorteilhafter Weise für die Herstellung von Tinten, insbesondere von Tinten für das Ink-Jet-Verfahren.

Das Ink-Jet-Verfahren ist an sich bekannt. Dabei werden Tröpfchen einer Schreibflüssigkeit aus einer oder mehreren kleinen Düsen gezielt auf einen Träger, z.B. auf Papier, Holz, Textilien, Kunststoff oder Metall, geschossen. Durch elektronische Aussteuerung werden die einzelnen Tröpfchen zu Schriftzeichen oder graphischen Mustern zusammengefaßt.

Für das Ink-Jet-Verfahren geeignete Aufzeichnungsflüssigkeiten enthalten im allgemeinen neben dem Farbmittel Wasser und/oder organische Lösungsmittel. In der EP-A-324 415 sind beispielsweise solche Ink-Jet-Tinten beschrieben.

Bei ihrer Anwendung in Tinten für das Ink-Jet-Verfahren zeichnen sich die neuen Disazofarbstoffe durch hohe Farbstärken und gute Wasser- und Schmierechtheit aus.

Die folgenden Beispiele sollen die Erfindung näher erläutern.

Beispiel 1

5,2 g (0,025 mal) m-Aminobenzoesäure-[2-(N,N-dimethylamino)ethyl]ester wurden auf übliche Weise mit Natriumnitrit in salzsaurem Medium diazotiert und zu einer alkalischen Lösung von 5,58 g (0,025 mol) 1-Aminonaphthalin-6-sulfonsäure gegeben. Man stellte einen pH-Wert von 3,5 ein und ließ 3 Stunden bei Raumtemperatur rühren.

Dann wurde der pH-Wert mit konzentrierter Salzsäure auf 1,5 gesenkt und der als Zwischenprodukt auftretende Monoazofarbstoff ohne Isolierung mit 8,6 ml 23 gew.-%iger wäßriger Natriumnitritlösung unter Eiskühlung diazotiert. Man gab 10,58 g (0,025 mol) 1-Benzoylamino-8-hydroxynaphthalin-3,6-disulfonsäure, gelöst in 200 ml Wasser (bei pH 6 bis 7), zur Diazoniumsalz-Lösung und stellte mit Natronlauge schnell

einen pH-Wert von 10 bis 11 ein. Nach einer Stunde wurde der pH-Wert mit Salzsäure auf 1 gesenkt und der Farbstoff mit Kochsalz ausgesalzen und dann abfiltriert. Der Farbstoff wurde unter Zugabe von Lithiumhydroxid in Wasser gelöst und durch Diafiltration entsalzt. Die Lösung wurde unter vermindertem Druck eingedampft. Man erhielt auf diese Weise 14,9 g eines rötlich schwarzen Farbstoffes der Formel

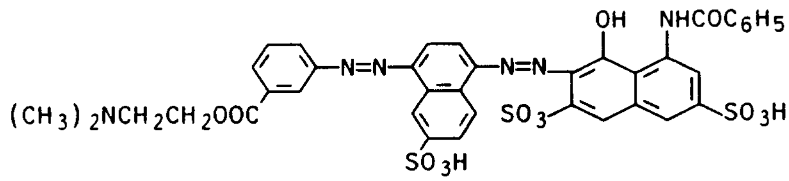

in Form des Lithiumsalzes.

In analoger Weise können die in den folgenden Tabellen 1 und 2 aufgeführten Disazofarbstoffe erhalten werden.

Tabelle 1

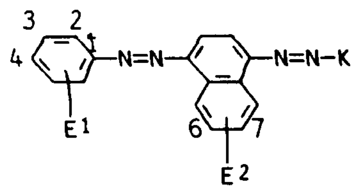

| Bsp. Nr. | $E^1$ | $E^2$ | K | Farbton |
|---|---|---|---|---|
| 2 | $3-COOC_2H_4N(CH_3)_2$ | $7-SO_3H$ | 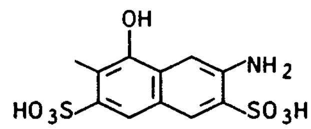 | schwarz |
| 3 | $3-COOC_2H_4N(CH_3)_2$ | $7-SO_3H$ | 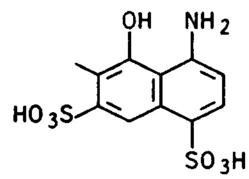 | schwarz |
| 4 | $3-COOC_2H_4N(CH_3)_2$ | $7-SO_3H$ | 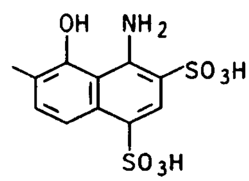 | schwarz |
| 5 | $3-COOC_2H_4N(CH_3)_2$ | $6-SO_3H$ | 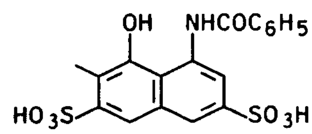 | rötlich-schwarz |
| 6 | $3-COOC_2H_4N(CH_3)_2$ | $7-SO_3H$ | 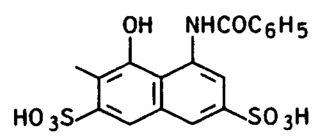 | blauschwarz |
| 7 | $3-COOC_2H_4N(CH_3)_2$ | $6-SO_3H$ | 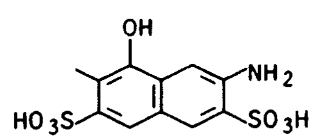 | schwarz |
| 8 | $4-COOC_2H_4N(CH_3)_2$ | $7-SO_3H$ | 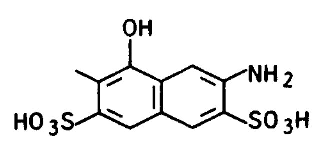 | schwarz |

Forts. Tab. 1

| Bsp. Nr. | $E^1$ | $E^2$ | K | Farbton |
|---|---|---|---|---|
| 9 | 4-$CONHC_3H_6N(CH_3)_2$ | 7-$SO_3H$ | 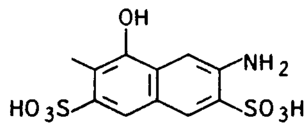 | blauschwarz |
| 10 | 4-$CONHC_2H_4N(C_2H_5)_2$ | 7-$SO_3H$ | 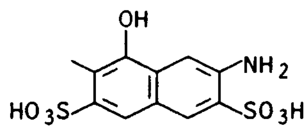 | schwarz |
| 11 | 3-$CONHC_2H_4N(CH_3)_2$ | 7-$SO_3H$ | 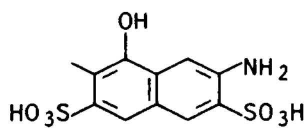 | schwarz |
| 12 | 4-$CONHC_2H_4N(CH_3)_2$ | 7-$SO_3H$ | 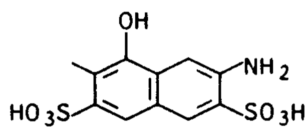 | dunkelblau |
| 13 | 4-$CONHC_2H_4N(C_2H_5)_2$ | 7-$SO_3H$ | 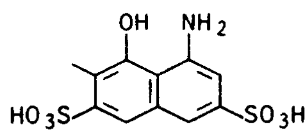 | dunkelblau |
| 14 | 3-$CONHC_2H_4N(C_2H_5)_2$ | 7-$SO_3H$ | 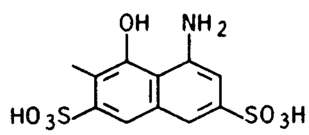 | blauschwarz |
| 15 | 4-$CONHC_2H_4N(CH_3)_2$ | 7-$SO_3H$ | 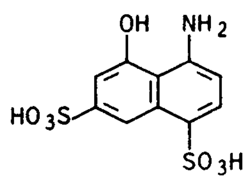 | blauschwarz |
| 16 | 3-$COOC_2H_4N(CH_3)_2$ | 7-$SO_3H$ | 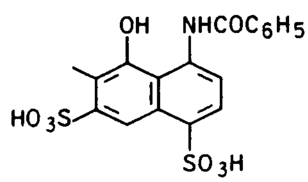 | bläulich-schwarz |

Forts. Tab. 1

| Bsp. Nr. | $E^1$ | $E^2$ | K | Farbton |
|---|---|---|---|---|
| 17 | $3\text{-}COOC_2H_4N(CH_3)_2$ | $7\text{-}SO_3H$ | 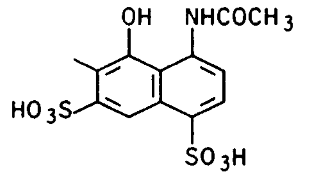 | dunkel-grau |
| 18 | $3\text{-}COOC_2H_4N(CH_3)_2$ | $7\text{-}SO_3H$ | 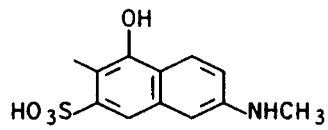 | schwarz |
| 19 | 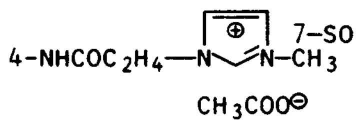 | $7\text{-}SO_3H$ | 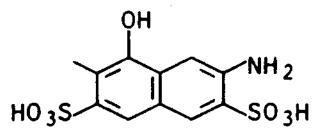 | schwarz |

Tabelle 2

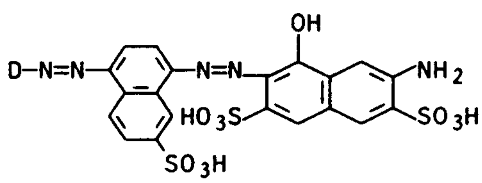

| Bsp.Nr. | D | Farbton |
|---|---|---|
| 20 | 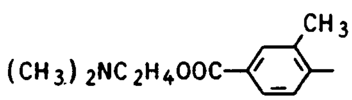 | schwarz |
| 21 | 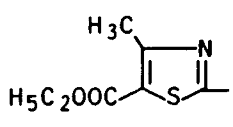 | schwarz |
| 22 | 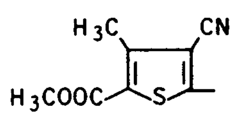 | dunkelblau |

Beispiel 23 (Anwendung)

3 g des Farbstoffs aus Beispiel 1 wurden in 90 ml Wasser und 10 ml N-Methylpyrrolidinon gelöst. Die Lösung wurde unter Druck durch ein Teflon Filter der Porengröße 1 µm filtriert und danach unter

vermindertem Druck entgast.

Mit dieser Aufzeichnungsflüssigkeit wurde das Aufnahmegefäß eines Tintenstrahl-Druckkopfes gefüllt, der unter dem Einfluß von zugeführter Wärme die Tinte tröpfchenförmig auswirft. Mit diesem Thermo-Ink-Jet-Druckkopf wurde ein handelsübliches Papier, wie es für Maschinenschriften verwendet wird, bedruckt. Die Drucke zeichnen sich durch gute Wasser- und Schmierechtheit aus.

## Patentansprüche

**1.** Disazofarbstoffe der Formel I

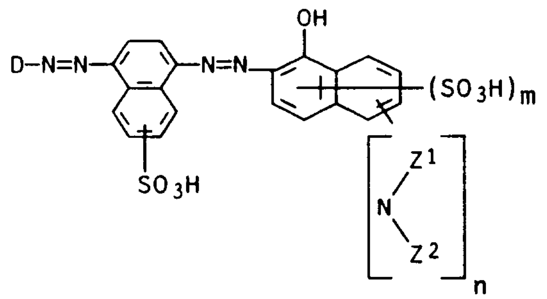

(I),

in der

m 1 oder 2,

n 0 oder 1,

$Z^1$ Wasserstoff oder gegebenenfalls substituiertes $C_1$-$C_4$-Alkyl,

$Z^2$ Wasserstoff, gegebenenfalls substituiertes $C_1$-$C_4$-Alkyl, $C_1$-$C_4$-Alkanoyl, gegebenenfalls substituiertes Benzoyl, $C_1$-$C_4$-Alkylsulfonyl, gegebenenfalls substituiertes Phenylsulfonyl oder einen Rest der Formel

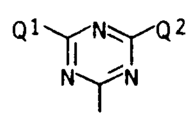

,

in der $Q^1$ und $Q^2$ gleich oder verschieden sind und unabhängig voneinander jeweils für Halogen, Amino, $C_1$-$C_4$-Mono- oder Dialkylamino oder Phenylamino stehen, und

D den Rest einer Diazokomponente aus der Thiazol- oder Thiophenreihe oder einen Rest der Formel

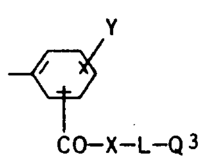

oder

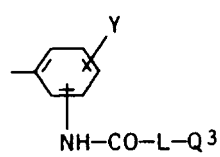

bedeuten, wobei

Y für Wasserstoff, gegebenenfalls substituiertes $C_1$-$C_6$-Alkyl, gegebenenfalls substituiertes $C_1$-$C_6$-Alkoxy, Halogen oder Nitro,

X für Sauerstoff, Imino oder $C_1$-$C_4$-Alkylimino,

L für $C_1$-$C_6$-Alkylen und

$Q^3$ für einen Rest der Formel

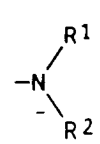

oder

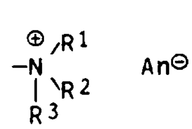

stehen, worin $R^1$, $R^2$ und $R^3$ gleich oder verschieden sind und unabhängig voneinander jeweils die Bedeutung von Wasserstoff, $C_1$-$C_4$-Alkyl oder Benzyl oder $R^1$ und $R^2$ zusammen mit dem sie verbindenden Stickstoffatom die Bedeutung eines 5- bis 7-gliedrigen gesättigten oder aromatischen heterocyclischen Rests, der gegebenenfalls weitere Heteroatome aufweist, und $An^{\ominus}$ die Bedeutung eines Anions besitzen.

**2.** Disazofarbstoffe nach Anspruch 1, dadurch gekennzeichnet, daß sie der Formel Ia

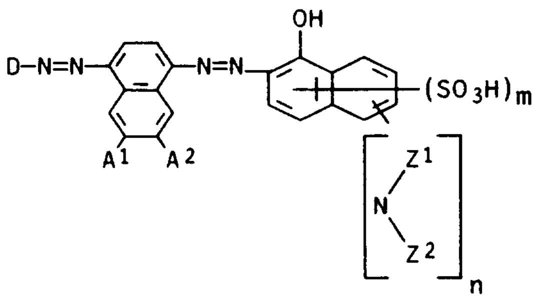

(Ia),

gehorchen, worin
einer der beiden Reste $A^1$ und $A^2$ Wasserstoff und der andere Hydroxysulfonyl bedeutet und m, n, D, $Z^1$ und $Z^2$ jeweils die in Anspruch 1 genannte Bedeutung besitzen.

**3.** Disazofarbstoffe nach Anspruch 1, dadurch gekennzeichnet, daß n 1 bedeutet.

**4.** Verwendung der Disazofarbstoffe gemäß Anspruch 1 zur Herstellung von Tinten.

## Claims

**1.** A disazo dye of the formula I

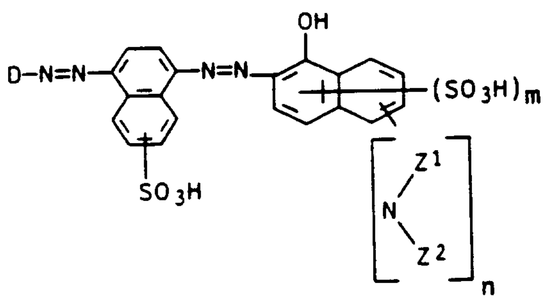

(I)

where

- m is 1 or 2,
- n is 0 or 1,
- $Z^1$ is hydrogen or substituted or unsubstituted $C_1$-$C_4$-alkyl,
- $Z^2$ is hydrogen, substituted or unsubstituted $C_1$-$C_4$-alkyl, $C_1$-$C_4$-alkanoyl, substituted or unsubstituted benzoyl, $C_1$-$C_4$-alkylsulfonyl, substituted or unsubstituted phenylsulfonyl or a radical of the formula

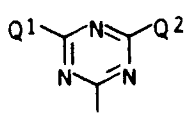

,

where $Q^1$ and $Q^2$ are identical or different and each is independently of the other halogen, amino, $C_1$-$C_4$-monoalkylamino, $C_1$-$C_4$-dialkylamino or phenylamino, and

D is the radical of a diazo component of the thiazole or thiophene series or a radical of the formula

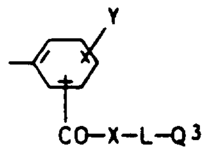

or

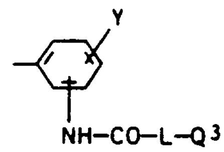

where

Y is hydrogen, substituted or unsubstituted $C_1$-$C_6$-alkyl, substituted or unsubstituted $C_1$-$C_6$-alkoxy, halogen or nitro,

X is oxygen, imino or $C_1$-$C_4$-alkylimino,

L is $C_1$-$C_6$-alkylene, and

$Q^3$ is a radical of the formula

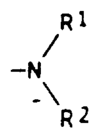

or

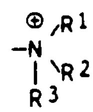

$An^\ominus$

where $R^1$, $R^2$ and $R^3$ are identical or different and each is independently of the others hydrogen, $C_1$-$C_4$-alkyl or benzyl, or $R^1$ and $R^2$ together with the nitrogen atom joining them together are a 5-, 6- or 7-membered saturated or aromatic heterocyclic radical which may possess further hetero atoms, and $An^\ominus$ is an anion.

**2.** A disazo dye as claimed in claim 1, conforming to the formula Ia

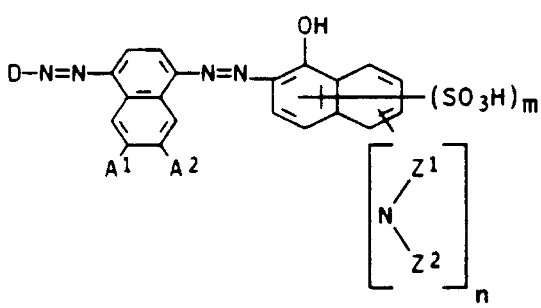

(Ia)

where

one of $A^1$ and $A^2$ is hydrogen and the other is hydroxysulfonyl and m, n, D, $Z^1$ and $Z^2$ are each as defined in claim 1.

**3.** A disazo dye as claimed in claim 1, wherein n is 1.

**4.** The use of a disazo dye as claimed in claim 1 for preparing an ink.

## Revendications

**1.** Colorants disazoïques de formule I

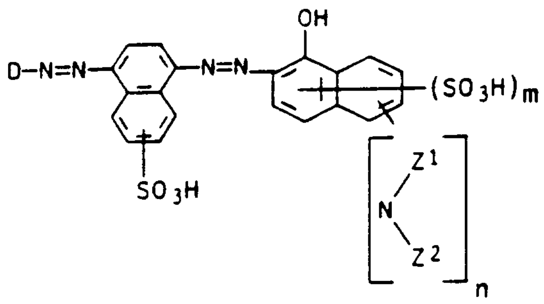

(I),

dans laquelle

m vaut 1 ou 2,

n vaut 0 ou 1,

$Z^1$ est un atome d'hydrogène ou un groupement alkyle en $C_1$-$C_4$ éventuellement substitué,

$Z^2$ est un atone d'hydrogène, un groupement alkyle en $C_1$-$C_4$ éventuellement substitué, alcanoyle en $C_1$-$C_4$, benzoyle éventuellement substitué, alkylsulfonyle en $C_1$-$C_4$, phénylsulfonyle éventuellement substitué ou un reste de formule

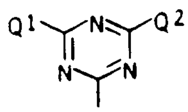

,

dans laquelle $Q^1$ et $Q^2$ sont identiques ou différents et représentent indépendamment l'un de l'autre un atome d'halogène ou un groupement amino, mono- ou di(alkyl en $C_1$-$C_4$)amino ou phénylamino, et

D représente un reste d'un composé diazoïque ou de la série du thiazole ou du thiophène ou un reste de formule

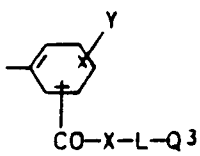

ou

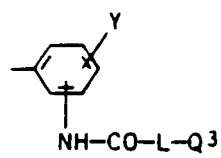

dans lesquelles

Y est mis pour un atome d'hydrogène, un groupement alkyle en $C_1$-$C_6$ éventuellement substitué, un groupement alcoxy en $C_1$-$C_6$ éventuellement substitué, un atome d'halogène ou un groupement nitro,

X est mis pour un atome d'oxygène ou un groupement imino ou alkylimino en $C_1$-$C_4$,

L est mis pour un groupement alkylène en $C_1$-$C_6$ et

$Q^3$ est mis pour un reste de formule

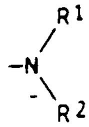

ou

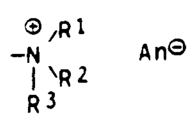

dans lesquelles $R^1$, $R^2$ et $R^3$ sont identiques ou différents et représentent indépendamment les uns des

autres un atome d'hydrogène, un groupement alkyle en $C_1$-$C_4$ ou un groupement benzyle, ou bien $R^1$ et $R^2$ avec l'atome d'azote auquel ils sont liés représentent un reste hétérocyclique saturé ou aromatique à 5-7 chaînons qui peut éventuellement présenter d'autres hétéroatomes, et $An^{\ominus}$ représente un anion.

**2.** Colorants disazoïques selon la revendication 1, caractérisés en ce qu'ils obéissent à la formule Ia

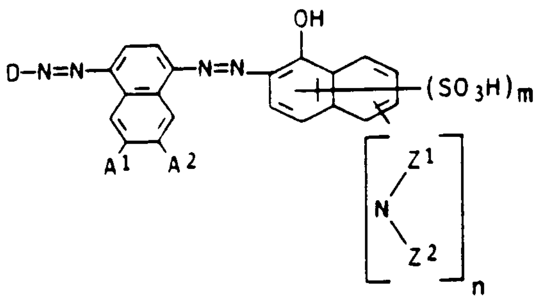

(Ia),

dans laquelle l'un des deux restes $A^1$ et $A^2$ est un atome d'hydrogène et l'autre est un groupement hydroxysulfonyle et m, n, D, $Z^1$ et $Z^2$ ont chacun la signification donnée dans la revendication 1.

**3.** Colorants disazoïques selon la revendication 1, caractérisés en ce que n vaut 1.

**4.** Utilisation des colorants disazoïques selon la revendication 1 pour la préparation d'encres.